# EUROPÄISCHE PATENTANMELDUNG

(11) **EP 2 058 618 A2**
(43) Veröffentlichungstag der Anmeldung: **13.05.2009**
(21) Anmeldenummer: 08017869.2
(22) Anmeldetag: 11.10.2008
(51) Int. Cl.: F28D 7/16, F28F 19/00, F28F 27/02

(54) **Vorrichtung zum Kühlen und/oder Heizen von Schüttgut**

(30) Priorität: 09.11.2007 DE 102007053520
(71) Anmelder: Coperion GmbH, 70469 Stuttgart (DE)
(72) Erfinder: Stark, Bernhard, 88273 Fronreute (DE); Zechner, Egon, 88250 Weingarten (DE)
(74) Vertreter: Hofmann, Matthias

(57) **Zusammenfassung**

Eine Vorrichtung (2) zum Kühlen und/oder Heizen von Schüttgut hat einen Wärmetauscherabschnitt (5), mit in einem Gehäuse (4) angeordneten Wärmetauscherelementen (6). Ein Wärmeträgerfluid wird über eine Zuführung (8) und eine Abführung (9) durch den Wärmetauscherabschnitt (5) hindurchgeführt. Einem Schüttgut-Auslaufabschnitt (7) zur Abführung des Schüttguts aus den Wärmetauscherelementen (6) im Förderweg für das Schüttgut nachgeordnet sind ein Normal-Förderweg (14) mit einer Dosiereinrichtung (18) für das Schüttgut und ein Bypass-Förderweg (15) mit einem die Dosiereinrichtung (18) unabhängig von deren Dosierstellung überbrückenden Förderdurchgang. Der Bypass-Förderweg (15) ist so ausgeführt, dass das Schüttgut in diesem ausschließlich unter Schwerkrafteinfluss förderbar ist. Es resultiert eine Wärmetauscher-Vorrichtung, deren Betriebssicherheit auch bei der Behandlung von Schüttgütern, die von Haus aus oder als Folge des Kühlens und/oder Heizens im Wärmetauscherabschnitt klebrig sind oder werden, gewährleistet ist.

## Beschreibung

Die Erfindung betrifft eine Vorrichtung zum Kühlen und/oder Heizen von Schüttgut nach dem Oberbegriff des Anspruchs 1.

Eine Vorrichtung der eingangs genannten Art ist bekannt aus der DE 10 2004 041 375 A1.

Als Schüttgüter können in der Vorrichtung Materialien gefördert werden, die bis nahe ihrer Schmelztemperatur im Wärmetauscherabschnitt erwärmt werden. So erwärmte Schüttgüter neigen dazu, anzuschmelzen und an der Oberfläche klebrig zu werden. Es besteht dann die Gefahr einer unerwünschten Agglomeration des Schüttguts sowie die Gefahr, dass das Schüttgut sich unerwünscht an Komponenten der Vorrichtung anlagert, wobei ein unerwünschtes Verkleben oder Zusammenbacken des Schüttguts mit diesen Komponenten stattfindet. Insbesondere besteht die Gefahr, dass eine Dosiereinrichtung, über die das Schüttgut nach Durchlauf durch die Vorrichtung geleitet wird, aufgrund beispielsweise einer Betriebsstörung oder aufgrund von anhaftendem Schüttgut festgeht, also zur Dosierung nicht mehr verlagert werden kann, was einen Ausfall der gesamten Vorrichtung nach sich ziehen kann.

Es ist eine Aufgabe der vorliegenden Erfindung, eine Vorrichtung der eingangs genannten Art derart weiterzubilden, dass deren Betriebssicherheit auch bei der Behandlung von Schüttgütern, die von Haus aus oder als Folge des Kühlens und/oder Heizens im Wärmetauscherabschnitt klebrig sind oder werden, gewährleistet ist.

Diese Aufgabe ist erfindungsgemäß gelöst durch eine Vorrichtung mit den im Anspruch 1 angegebenen Merkmalen.

Erfindungsgemäß wurde erkannt, dass insbesondere Schüttgüter aus Kunststoffmaterialien, insbesondere Kunststoffgranulate, beim Aufheizen umso mehr zum Zusammenhaften oder zum Anhaften insbesondere an Wärmeübertragungsflächen der Wärmetauscherelemente neigen, je höher einerseits die Temperatur des Wärmeträgerfluids ist, und je länger andererseits das Produkt im Wärmetauscherabschnitt stillsteht. Was einen zu vermeidendenden Stillstand des Schüttguts angeht, ist oftmals die der Wärmetauschervorrichtung üblicherweise nachgeordnete Dosiereinrichtung die für die Gewährleistung eines sicheren Betriebes der Vorrichtung ausschlaggebende Komponente. Im Bereich der Dosiereinrichtung wird durch die erfindungsgemäße Vorrichtung eine Schüttgutförderung unabhängig von einer Dosierstellung der Dosiereinrichtung gewährleistet, also auch dann, wenn die Dosiereinrichtung beispielsweise aufgrund einer Betriebsstörung oder durch anhaftendes Schüttgut nicht mehr verlagerbar sein sollte. Diese Schüttgutförderung wird dann über den Bypass-Förderweg sichergestellt. Ein Stillstand des Schüttguts im Wärmetauscherabschnitt wird somit sicher vermieden. Dies verhindert insbesondere, dass das Schüttgut sich im Wärmetauscherabschnitt unerwünscht ausdehnt, dort unerwünscht weich wird und somit unerwünscht beispielsweise mit den Wärmetauscherelementen verklebt oder untereinander verklebt. Weiterhin wurde erfindungsgemäß erkannt, dass ein Schüttgut, insbesondere ein Kunststoffgranulat, wenn es sich in permanenter Bewegung im Wärmetauscherabschnitt befindet, mit einer höheren Temperatur des Heizmediums aufgeheizt werden kann, ohne dass dies zu einer Gefahr eines Verklebens oder Anbackens des Schüttguts führt. Eine höhere Temperatur des Heizmediums reduziert die für einen gleichen vorgegebenen Wärmeübergang benötigte Wärmetauscherfläche. Insgesamt ermöglicht der Bypass-Förderweg daher eine insgesamt kostengünstiger herstellbare Vorrichtung. Der Bypass-Förderweg stellt eine Schüttgutförderung in außergewöhnlichen Betriebssituationen der Vorrichtung zur Verfügung, die nachfolgend auch als Sonder-Betriebszustände bezeichnet werden. Während der Förderung über den Bypass-Förderweg kann der Normal-Förderweg gewartet werden oder es können Komponenten im Normal-Förderweg ausgetauscht werden. Die Förderwege, also der Normal-Förderweg und der Bypass-Förderweg, können dem Schüttgut-Auslaufabschnitt in einer zunächst gemeinsamen Auslaufleitung nachgeordnet sein, die sich dann beispielsweise in die beiden Förderwege verzweigt. Alternativ ist es möglich, dass der Bypass-Förderweg an anderer Stelle aus dem Auslaufabschnitt ausmündet als der Normal-Förderweg. Zusätzlich zur Förderung unter Schwerkrafteinfluss kann die Förderung im Normal-Förderweg sowie im Bypass-Förderweg beispielsweise durch Einsatz eines Druckgases noch unterstützt werden.

Eine Zellenradschleuse nach Anspruch 2 gewährleistet eine gut kontrollierbare Dosierung der Schüttgutförderung. Zudem kann die Zellenradschleuse so ausgeführt sein, dass der Schüttgutförderweg im Bereich der Zellenradschleuse im wesentlichen gasdicht ist. Dies kann insbesondere dazu genutzt werden, in den Wärmetauscherabschnitt der Vorrichtung stromaufwärts der Zellenradschleuse ein zusätzliches Wärmeübertragungsgas einzuleiten, welches dann nicht unerwünscht über die Zellenradschleuse entweichen kann.

Eine Förderweiche nach Anspruch 3 ermöglicht eine betriebssichere Umstellung zwischen einem Normalbetrieb und einem Bypassbetrieb der Vorrichtung.

Entsprechendes gilt für ein Bypassventil nach Anspruch 4.

Ein Schieber nach Anspruch 5 stellt eine standfeste und kostengünstig ausführbare Variante eines Bypassventils dar. Alternativ zu einem Schieber kann auch eine Klappe oder ein Kugelhahn als Bypassventil eingesetzt sein.

Ein Bypass-Förderweg nach Anspruch 6 erfordert nur geringe konstruktive Änderungen an der Zellenradschleuse. Alternativ kann ein Zwischenraum zur die Zellenradschleuse überbrückenden Bypass-Förderung auch durch Aussparungen im Zellenrad oder durch eine Erhöhung des axialen Spiels des Zellenrades zu Seitendeckeln des Zellenrades geschaffen werden. Ein Zwischenraum zwischen dem Zellenrad und dem Zellenradgehäuse kann durch einen Bypasskanal in Form einer das Zellenrad überbrückenden Gehäusenut oder eines entsprechenden Gehäusekanals geschaffen werden. Ebenso kann ein radialer Spalt zwischen dem Gehäuse und dem Zellenrad so vergrößert werden, dass bei einem Stillstand des Zellenrades in der Zellenradschleuse das Schüttgut die Zellenradschleuse durch diesen radialen Spalt dennoch passieren kann.

Eine Zellenradschleuse nach Anspruch 7 führt zu kurzen Zellenrad-Wartungsintervallen der Vorrichtung. Eine Zellenradschleuse mit schnell zugänglichem Zellenrad ist bekannt aus DE 20 2005 004 889 U1.

Ein Schieberventil nach Anspruch 8 mit integriertem Bypass-Förderweg führt zu einer kostengünstigen Ausgestaltung der Vorrichtung. Alternativ zu einem Schieberventil kann beispielsweise auch ein Kugelhahnventil als Dosiereinrichtung eingesetzt werden.

Varianten der Bypass-Öffnung nach den Ansprüchen 9 und 10 sind Ausgestaltungen der Dosiereinrichtung mit integriertem Bypass-Förderweg, die jeweils nach den baulichen Anforderungen von besonderem Vorteil sein können.

Mit einer Ausführung nach Anspruch 11 kann eine Gefährdung der Betriebssicherheit durch Anhaften des Schüttguts vermieden werden, in dem über das Wärmeträgerfluid das Schüttgut im Bedarfsfalle gekühlt wird. Das Wärmeträgerfluid wird dann mit mehrfacher Funktion verwendet. Zum einen dient es zum gezielten Temperieren des Schüttguts während des Betriebs einer Anlage, deren Teil die erfindungsgemäße Vorrichtung ist. Zum anderen dient das Wärmeträgerfluid zum Abfangen der Sonder-Betriebszustände, bei denen das Schüttgut besonders zum Anhaften an Komponenten der Vorrichtung neigt. Hierzu dient das neben der Heizquelle noch zusätzlich vorhandene Kühlaggregat. Es handelt sich hierbei nicht um ein Kühlaggregat, welches zum normalen Kühlen des Wärmeträgerfluids im Wärmetauscherbetrieb bereits eingesetzt wird, sondern um ein zusätzliches Kühlaggregat, mit dem eine Art Notkühlung für das Schüttgut im Sonder-Betriebszustand bereitgestellt wird.

Ein Kühlaggregat nach Anspruch 12 erlaubt ein besonders schnelles Abkühlen des Wärmeträgerfluids und damit auch des Schüttguts im Wärmetauscherabschnitt der Vorrichtung. Die Bypass-Anordnung ermöglicht dabei, dass im Normalbetrieb das Wärmeträgerfluid das Kühlaggregat nicht passiert.

Eine zusätzliche Quelle für Wärmeträgerfluid nach Anspruch 13 ermöglicht ebenfalls ein schnelles Abkühlen des Schüttguts. Es kann beispielsweise ein Behälter mit einer Sondermenge abgekühlten Wärmeträgerfluids ständig bereitgehalten werden, das im Notfall in die Zuführung des Wärmeträgerfluids eingeschleust wird.

Wärmetauscherrohre nach Anspruch 14 haben sich als Wärmetauscherelemente zum Einsatz beim Kühlen und/oder Heizen von Schüttgut besonders bewährt. Das Wärmeträgerfluid oder aber auch das Schüttgut können dabei innerhalb der Wärmetauscherrohre geführt werden. Alternativ kann es sich bei den Wärmetauscherelementen beispielsweise auch um parallel angeordnete Wärmetauscherplatten handeln.

Ausführungsbeispiele der Erfindung werden nachfolgend anhand der Zeichnung näher erläutert. In dieser zeigen:
- Fig. 1: einen Ausschnitt einer Anlage zur Herstellung eines Polymer-Granulats mit einer Vorrichtung zum Kühlen und/oder Heizen von Schüttgut schematisch im vertikalen Längsschnitt mit einer ersten Ausführung eines Förderwegs für das Schüttgut zwischen der Kühl- und/oder Heizvorrichtung für Schüttgut und einem nachgelagerten Silobehälter;
- Fig. 2: in einer zu Fig. 1 ähnlichen Darstellung eine weitere Ausführung eines Förderwegs zwischen der Vorrichtung zum Kühlen und/oder Heizen von Schüttgut und dem nachgelagerten Silobehälter;
- Fig. 3: in einer zu Fig. 1 ähnlichen Darstellung eine weitere Ausführung eines Förderwegs zwischen der Vorrichtung zum Kühlen und/oder Heizen von Schüttgut und dem nachgelagerten Silobehälter;
- Fig. 4: gegenüber Fig. 3 vergrößert einen Schnitt gemäß Linie IV-IV in Fig. 3;
- Fig. 5: in einer zu Fig. 1 ähnlichen Darstellung eine weitere Ausführung eines Förderwegs zwischen der Vorrichtung zum Kühlen und/oder Heizen von Schüttgut und dem nachgelagerten Silobehälter;
- Fig. 6: eine Variante einer Vorrichtung zum Kühlen und/oder Heizen von Schüttgut in einer zu Fig. 1 ähnlichen Darstellung, die zusätzlich schematisch Details einer Einrichtung zum Kühlen und/oder Heizen eines Wärmeträgerfluids darstellt;
- Fig. 7: in einer zu Fig. 6 ähnlichen Darstellung eine weitere Ausführung einer Einrichtung zum Kühlen und/oder Heizen des Wärmeträgerfluids; und
- Fig. 8: in einer zu Fig. 6 ähnlichen Darstellung eine weitere Ausführung einer Einrichtung zum Kühlen und/oder Heizen des Wärmeträgerfluids.

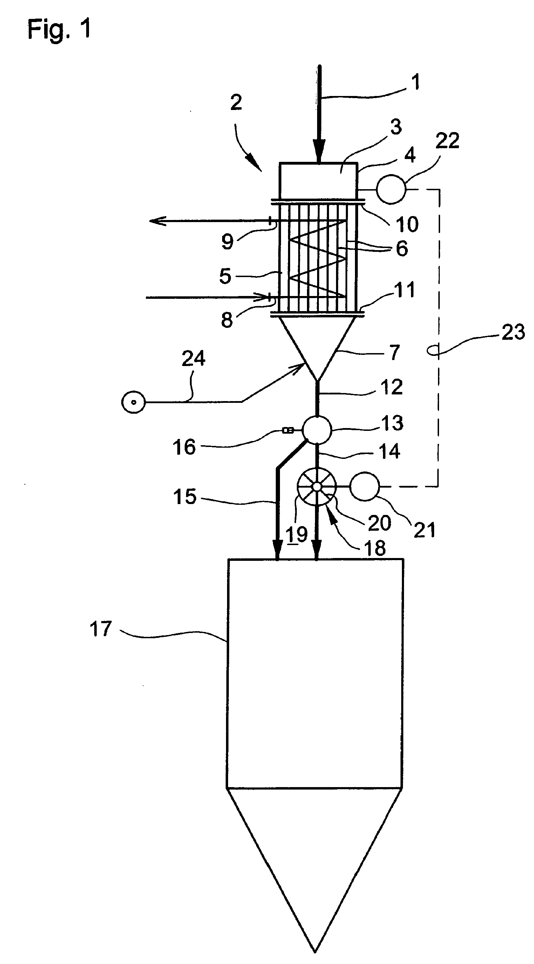

Fig. 1 zeigt einen Ausschnitt einer Anlage zur Herstellung eines Polymer-Granulats, beispielsweise zur Herstellung eines Polypropylen-(PP-)Granulats oder eines Polyethylen-(PE-)Granulats hoher Dichte (HDPE) oder deren Copolymere. Weitere Beispiele für Polymer-Granulate sind ein Granulat aus thermoplastischem Polyurethan, Polyester, Polyamid oder Polyoxymetyhlen. Eine Zuführleitung 1, in der das Granulat als Schüttgut im Wege der pneumatischen Förderung transportiert wird, verbindet, ggf. über einen nicht dargestellten Pufferbehälter, einen nicht dargestellten Extruder mit einer Wärmetauschervorrichtung 2 zum Kühlen und/oder Heizen des Schüttguts. Das Schüttgut wird über die Zuführleitung 1 einem oberen Einlauf- bzw. Pufferabschnitt 3 eines Gehäuses 4 der Wärmetauschervorrichtung 2 zugeführt. Das Schüttgut kann als Pulver, als Granulat oder auch in Form von Pastillen oder Prills vorliegen. Als Schüttgut kann ein Kunststoff, insbesondere ein teilkristalliner Kunststoff, insbesondere ein Polyolefin, zum Einsatz kommen.

In dem Gehäuse 4 ist unterhalb des Einlauf- bzw. Pufferabschnitts 3 ein Wärmetauscherabschnitt 5 angeordnet. In diesem sind parallel zueinander vertikal verlaufende Wärmetauscherelemente in Form von Wärmetauscherrohren 6 jeweils mit Abstand zueinander angeordnet. Der innere Querschnitt der Wärmetauscherrohre 6 kann kreisförmig, quadratisch, rechteckig oder oval sein. Die Wärmetauscherrohre 6 haben ein Verhältnis von Länge zu Durchmesser, das im Bereich zwischen 15 und 300 und insbesondere zwischen 30 und 250 liegt.

Unter dem Wärmetauscherabschnitt 5 ist ein Auslaufabschnitt 7 des Gehäuses 4 angeordnet. Ein Innenraum des Auslaufabschnitts 7 wird nachfolgend auch als Auslauf-Sammelraum bezeichnet.

Benachbart zum Auslaufabschnitt 7 mündet in den Wärmetauscherabschnitt 5 ein Zuführstutzen 8 für ein Wärmeträgerfluid ein. Als Wärmeträgerfluid kann Dampf, heißes Gas, heißes Wasser oder Wärmeträgeröl verwendet werden. Benachbart zum Pufferabschnitt 3 mündet ein Abführstutzen 9 für das Wärmeträgerfluid aus dem Wärmetauscherabschnitt 5 aus.

Nicht näher dargestellte Umlenkplatten im Innern des Wärmetauscherabschnitts 5 geben zwischen den Wärmetauscherrohren 6 im Wärmetauscherabschnitt 5 einen mäanderförmigen Strömungsweg für das Wärmeträgerfluid vor, der in die Fig. 1 durch eine Zickzack-Linie angedeutet ist. Das Wärmeträgerfluid strömt also im Wesentlichen quer zur Längsrichtung der Wärmetauscherrohre 6 schrittweise nach oben vom Zuführstutzen 8 aus hin zum Abführstutzen 9. Der Wärmetauscherabschnitt 5 ist also für einen Kreuzgegenstrom des Wärmeträgerfluids ausgelegt.

Die Wärmetauscherrohre 6 sind an ihren oberen Enden mit einem fest mit dem Gehäuse 5 verbundenen Einlauf-Rohrboden 10 und an ihren unteren Enden mit einem Auslauf-Rohrboden 11 verbunden. Die Wärmetauscherrohre 6 sind einerseits zum Pufferabschnitt 3 und andererseits zum Auslaufabschnitt 7 hin offen. Zwischen dem Pufferabschnitt 3 und dem Wärmetauscherabschnitt 5 einerseits und dem Wärmetauscherabschnitt 5 und dem Auslaufabschnitt 7 andererseits ist das Gehäuse 4 über Flanschverbindungen zusammengesetzt.

Der Auslaufabschnitt 7 hat die Form eines sich nach unten verjüngenden kegelförmigen Trichters. Aus dem Boden des Auslaufabschnitts 7 mündet eine Abführleitung 12 zur Abführung des Schüttguts aus der Wärmetauschervorrichtung 2 aus.

Die Abführleitung 12 verzweigt sich über eine Förderweiche 13 in eine Normal-Föderleitung 14 und eine Bypass-Förderleitung 15. Über einen Stellantrieb 16 kann die Förderweiche 13 zwischen einer Normalstellung und einer Bypass-Stellung umgestellt werden. In der Normalstellung gibt die Förderweiche 13 einen Normal-Förderweg von der Abführleitung 12

hin zur Normal-Föderleitung 14 frei und sperrt gleichzeitig einen Bypass-Förderweg zwischen der Abführleitung 12 und der Bypass-Förderleitung 15. In der Bypass-Stellung gibt die Förderweiche 13 den Bypass-Förderweg von der Abführleitung 12 hin zur Bypass-Förderleitung 15 frei und sperrt gleichzeitig den Normal-Förderweg zwischen der Abführleitung 12 und der Normal-Förderleitung 14.

Die Bypass-Förderleitung 15 ist so gestaltet, dass das Schüttgut in der Bypass-Förderleitung 15 ausschließlich unter Schwerkrafteinfluss von der Abführleitung 12 hin zum Silobehälter 17 gefördert wird, sobald die Förderweiche 13 in der Bypass-Stellung vorliegt.

Die Normal-Förderleitung 14 und die Bypass-Förderleitung 15 münden in einen Silobehälter 17 ein. Letzterer kann beispielsweise als Entgasungssilo ausgeführt sein. Eine Erwärmung des Schüttguts im Wärmetauscherabschnitt 5 beschleunigt die Entgasung des Schüttguts, insbesondere was die Diffusion längerkettiger Kohlenwasserstoffe angeht.

In der Normal-Förderleitung 14 ist zwischen der Förderweiche 13 und dem Silobehälter 17 eine Zellenradschleuse 18 angeordnet. Diese hat ein Gehäuse 19, in dem ein Zellenrad 20 angeordnet ist. Letzteres ist von einem Antrieb 21 um eine horizontale Achse drehantreibbar. Der Antrieb 21 wird von einem Füllstands-Melder 22 über eine Signalleitung 23 angesteuert. Der Füllstands-Melder 22 erfasst den Füllstand des Schüttguts im Pufferabschnitt 3.

Die Zellenradschleuse 18 stellt eine Dosiereinrichtung für Schüttgut innerhalb der Normal-Förderleitung 14 dar.

In den Auslauf-Abschnitt 7 mündet eine Gas-Zuführleitung 24 für ein Wärmeträgergas ein. An die Gas-Zuführleitung 24 angeschlossen ist ein Druckgaserzeuger 25, bei dem es sich beispielsweise um einen Ventilator, um ein Drehkolbengebläse, um einen Schraubenverdichter oder um ein Seitenkanalgebläse handeln kann. In der Gas-Zuführleitung 24 kann zusätzlich ein nicht dargestellter Wärmetauscher angeordnet sein, mit dem das Wärmeträgergas wahlweise geheizt oder gekühlt oder auch nur geheizt oder auch nur gekühlt werden kann. Das Wärmeträgergas stellt ein vom Wärmeträgerfluid, das über den Zuführstützen 8 zugeführt wird, unabhängiges Medium zur Verbesserung des Wärmeübertrags zwischen dem Schüttgut und dem Wärmeträgerfluid in den Wärmetauscherrohren 6 dar. Das Wärmeträgergas strömt vom Auslaufabschnitt 7 in Gegenrichtung des Schüttguttransports durch die Wärmetauscherrohre 6 und den Pufferabschnitt 3. Von dort wird das Wärmeträgergas kontrolliert abgeführt.

Im Normalbetrieb, also in der Normalstellung der Förderweiche 13, ist der Förderweg des Schüttguts abführseitig des Auslaufabschnitts 7 im Wesentlichen gasdicht, da die Zellenradschleuse 18 für eine entsprechende Dichtigkeit sorgt.

Bei einer nicht dargestellten Ausführung kann die Bypass-Förderleitung 15 nach der Zellenradschleuse 18 wieder in die Normal-Förderleitung 14 einmünden.

In der Bypass-Stellung der Förderweiche 13 überbrückt die Bypass-Förderleitung 15 die Zellenradschleuse 18 unabhängig von einer Dosierstellung des Zellenrades 20 im Zellenradgehäuse 19.

Der in der Fig. 1 dargestellte Anlagenteil wird folgendermaßen betrieben: In der Wärmetauschervorrichtung 2 wird das über die Zuführleitung 1 zugeführte Schüttgut beispielsweise erwärmt. Diese Erwärmung kann bis nahe eines Schmelzpunktes des granulierten Polymers erfolgen. Für den Fall, dass das entsprechend erwärmte Polymergranulat die Zellenradschleuse 18 verklebt oder zu verkleben beginnt, was beispielsweise über eine Drehzahlerfassung auf einer Zellenradwelle oder auch über eine Drehmomenterfassung am Antrieb 21 detektiert werden kann, wird die Förderweiche 13 von der Normal- in die Bypass-Stellung umgestellt. Das Schüttgut, also das erwärmte Polymer-Granulat, fließt dann über die Bypass-Förderleitung 15 in den Silobehälter 17 ab. Im Bypassbetrieb wird toleriert, dass Wärmeübertragungsgas nicht nur in Gegenstromrichtung zum Schüttgut, sondern in gewissem Umfang auch in Stromrichtung des Schüttguts über die Leitungen 12 und 15 abgeführt wird. Im Bypassbetrieb der Anlage kann die Zellenradschleuse 18 gereinigt oder gegen eine Austausch-Zellenradschleuse ersetzt werden.

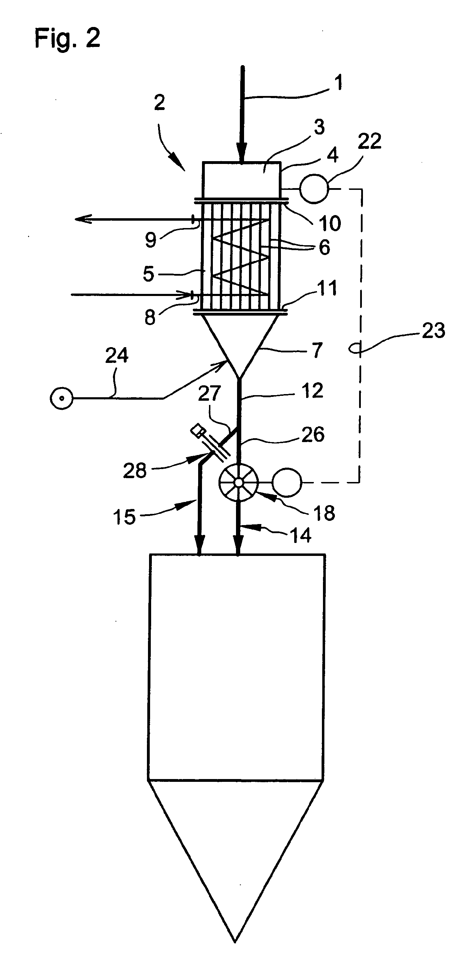

Fig. 2 zeigt eine Variante der auslaufseitigen Förderweggestaltung. Komponenten, die denjenigen entsprechen, die vorstehend unter Bezugnahme auf die Fig. 1 bereits erläutert wurden, tragen die gleichen Bezugsziffern und werden nicht nochmals im Einzelnen diskutiert.

Die Ausführleitung 12 gabelt sich bei der Ausführung nach Fig. 2 in einen Normal-Leitungsabschnitt 26 und einen Bypass-Leitungsabschnitt 27. Dem Bypass-Leitungsabschnitt 27 in der Bypass-Leitung 15 nachgeordnet ist ein Bypass-Ventil 28 in Form eines Schiebers. Der Schieber 28 kann über einen Schiebermotor verlagert werden zwischen einer Schließstellung, in der die Bypass-Förderleitung 15 verschlossen ist, und einer Freigabestellung, in der die Bypass-Förderleitung 15 freigegeben ist.

Der Normalbetrieb der Anlage nach Fig. 2 findet mit dem Bypass-Ventil 28 in der Schließstellung entsprechend dem statt, was vorstehend im Zusammenhang mit der Fig. 1 ausgeführt wurde. Im Bypassbetrieb wird das Bypass-Ventil 28 geöffnet, so dass eine Abführung des Schüttguts aus der Wärmetauschervorrichtung 2 über die Leitungen 12 und 15 in den Silobehälter 17 erfolgen kann. Nun kann der Normal-Leitungsabschnitt 26 oberhalb der Zellenradschleuse 18 über einen nicht dargestellten Absperrhahn verschlossen und die Zellenradschleuse 18 kann gewartet oder ausgetauscht werden.

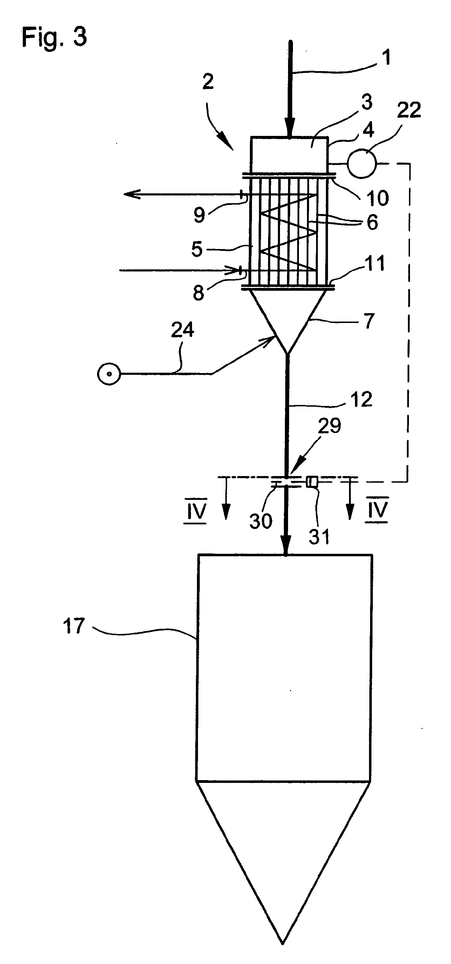

Fig. 3 zeigt eine weitere Variante einer Schüttgutförderung zwischen der Wärmetauschervorrichtung 2 und dem Silobehälter 17, wobei hier ebenfalls sowohl ein Normal-Förderweg als auch ein Bypass-Förderweg vorgesehen sind. Komponenten, die denjenigen entsprechen, die vorstehend unter Bezugnahme auf die Fig. 1 und 2 bereits erläutert wurden, tragen die gleichen Bezugsziffern und werden nicht nochmals im Einzelnen diskutiert.

Anstelle einer Zellenradschleuse hat die Anlage nach Fig. 3 zwischen der Wärmetauschervorrichtung 2 und dem Silobehälter 17 ein Schieberventil 29 als Dosiereinrichtung. Ein Schieber 30 des Schieberventils 29 kann über einen Antrieb 31, beispielsweise über einen pneumatischen Stellantrieb oder einen Stellmotor, zwischen verschiedenen Dosierstellungen verlagert werden.

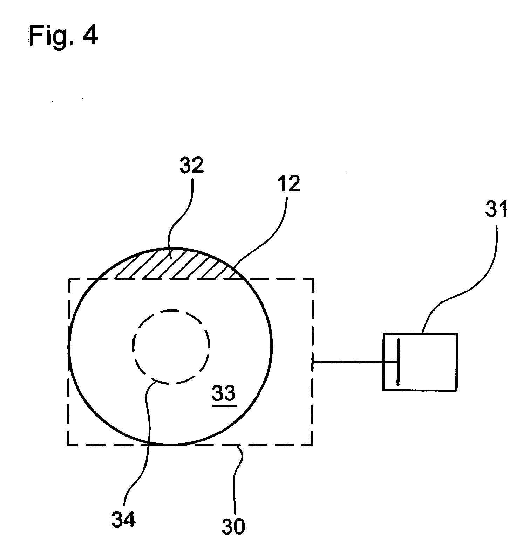

Fig. 4 zeigt in einem Schnitt durch die Abführleitung 12 eine Aufsicht auf den Schieber 30 in der Abführleitung 12. Der Schieber 30 überdeckt in der Schließstellung, die in der Fig. 4 dargestellt ist, einen inneren Querschnitt der Abführleitung 12 nicht vollständig, sondern lässt auch in der Schließstellung eine seitliche, segmentförmige Bypass-Öffnung 32, also einen Teil des Querschnitts der Abführleitung 12 frei. Die Bypass-Öffnung 32 ist in der Fig. 4 gestrichelt dargestellt. Die Bypass-Öffnung 32 gibt einen Bypass-Förderweg für das Schüttgut frei, dessen Funktion der Bypass-Förderleitung 15 der Ausführungen nach den Fig. 1 und 2 entspricht. Der Rest des Innenquerschnitts der Abführleitung 12, der vom Schieber 30 wahlweise freigegeben oder verschlossen werden kann, stellt einen Normal-Förderweg 33 dar, dessen Funktion derjenigen der Normal-Förderleitung der Ausführungen nach den Fig. 1 und 2 entspricht.

Die Anlage nach den Fig. 3 und 4 wird folgendermaßen betrieben: In einer Normalstellung des Schiebers 30 gibt dieser je nach einer Dosiervorgabe, die der Antrieb 31 über den Füllstands-Melder 22 erhält, einen Teil des Normal-Förderwegs 33 oder den gesamten Normal-Förderweg 33 in der Abführleitung 12 frei. Zusammen mit der Länge der Abführleitung 12 zwischen dem Auslaufabschnitt 7 und dem Schieberventil 29 wird die Dosierstellung, abgestimmt auf das geförderte Schüttgut, so gewählt, dass das Schüttgut in der Abführleitung 12 zwischen dem Auslaufabschnitt 7 und dem Schieberventil 29 selbst für eine ausreichende Abdichtung sorgt, so dass das Wärmeübertragungsgas von der Gas-Zuführleitung 24 praktisch vollständig entgegen der Schüttgut-Förderrichtung durch die Wärmetauschervorrichtung 2 wie gewünscht geführt ist. Die Bypass-Öffnung 32 gewährleistet, dass unabhängig von der Dosierstellung des Schiebers 30 immer zumindest ein Teilquerschnitt der Abführleitung 12 frei bleibt, so dass zumindest ein reduzierter Schüttgutfluss möglich bleibt.

Auch dann, wenn der Schieber 30 im Schieberventil 29 verklebt und zumindest zeitweilig nicht mehr verstellt werden kann, bleibt über die Bypass-Öffnung 32 ein Schüttguttransport von der Wärmetauschervorrichtung 2 hin zum Silobehälter 17 gesichert.

Anstelle einer seitlich am Schieber 30 vorbei geleiteten Bypass-Öffnung 32 kann eine Bypass-Öffnung auch im Schieber 30 selbst vorgesehen sein, wie in der Fig. 4 gestrichelt bei 34 angedeutet. Die Bypass-Öffnung 34 ist an einem Ort des Schiebers 30 vorgesehen, der unabhängig von der Schieber-Dosierstellung immer innerhalb des Querschnitts der Abführleitung 12 verbleibt. Hierdurch ist sichergestellt, dass ein Bypass-Förderweg unabhängig von der Stellung des Schiebers 30 für das Schüttgut immer zur Verfügung steht. Soweit eine Bypass-Öffnung 34 im Schieber 30 selbst vorgesehen ist, kann der Schieber ansonsten den Querschnitt der Abführleitung 12 vollständig überdecken. Es muss dann also keine seitliche Bypass-Öffnung 32 vorgesehen sein.

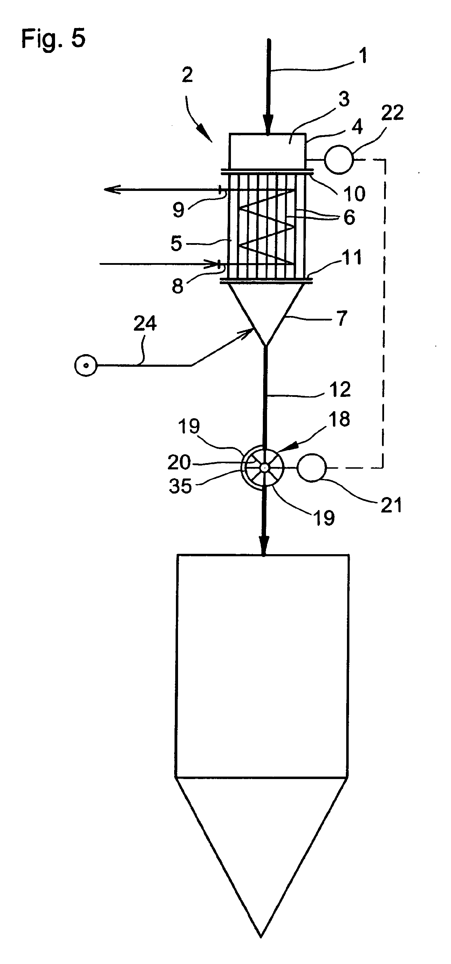

Fig. 5 zeigt eine weitere Gestaltung der Schüttgut-Förderung zwischen einer Wärmetauschervorrichtung und einem Silobehälter. Komponenten, die denjenigen entsprechen, die vorstehend schon unter Bezugnahme auf die Fig. 1 bis 4 erläutert wurden, tragen die gleichen Bezugsziffern und werden nicht nochmals im Einzelnen diskutiert.

Bei der Variante nach Fig. 5 ist ein Bypass-Förderweg 35 in einem Zwischenraum zwischen dem Zellenradgehäuse 19 und dem Zellenrad 20 vorgesehen. Das Zellenrad 20 dichtet dabei längs eines Gehäusekanals in einem Umfangsabschnitt des Zellenrades 20, der der linken Hälfte des Zellenradgehäuses 19 in der Darstellung nach Fig. 5 entspricht, nicht gegen das Zellenradgehäuse 19 ab. Unabhängig von einem Betrieb oder von einer Zellenradstellung der Zellenradschleuse 18 ist daher ein Schüttguttransport über den Bypass-Förderweg 35 möglich. Ein alternativer Bypass-Förderweg zur Überbrückung des Zellenrades 20 innerhalb des Zellenradgehäuses 19 kann auch durch eine Aussparung im Zellenrad selbst, beispielsweise eine radiale Aussparung an den einzelnen Zellenrad-Stegen oder eine axiale Aussparung benachbart zu den Seitendeckeln gebildet sein.

Die Zellenradschleuse 18 kann mit einem schnell zugänglichen oder wechselbaren Zellenrad 20 ausgeführt sein. Das Zellenrad 20 kann dann mit wenigen Handgriffen aus dem Zellenradgehäuse 19 entfernt werden. Das Innere des Zellenradgehäuses 19 sowie das Zellenrad 20 selbst können dann gereinigt werden. Das Zellenrad 20 kann alternativ auch gegen ein Austausch-Zellenrad ausgetauscht werden.

Der Bypass-Förderweg kann bei einer nicht dargestellten Variante auch beabstandet von der Abführleitung 12 aus dem Auslaufabschnitt 7 ausmünden.

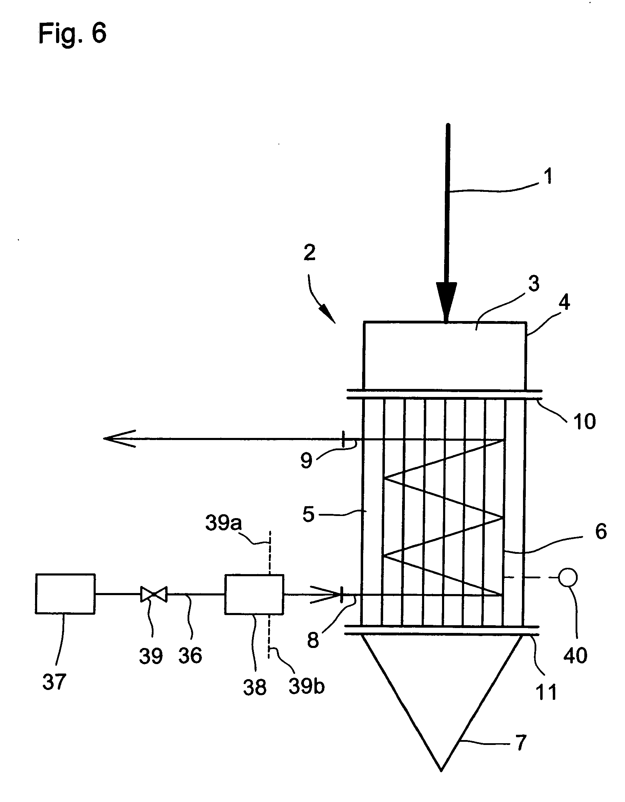

Fig. 6 zeigt Details einer Wärmetauschervorrichtung 2, die in den Anlagenvarianten nach den Fig. 1 bis 5 zum Einsatz kommen kann. Komponenten, die denjenigen entsprechen, die vorstehend schon unter Bezugnahme auf die Fig. 1 bis 5 erläutert wurden, tragen die gleichen Bezugsziffern und werden nicht nochmals im Einzelnen diskutiert.

In einer Fluid-Zuführleitung 36 für das Wärmeträgerfluid ist zuführseitig eine Heizquelle 37 angeordnet. Hierbei kann es sich beispielsweise um einen Gas-Wärmetauscher handeln, mit dem das Wärmeträgerfluid geheizt wird. Der Heizquelle 37 in der Fluid-Zuführleitung 36 nachgeordnet ist ein wahlweise zuschaltbares Kühlaggregat 38 für das Wärmeträgerfluid. Beim Kühlaggregat 38 kann es sich ebenfalls um einen Wärmetauscher handeln. Bei der Heizquelle 37 und dem Kühlaggregat 38 handelt es sich um voneinander separate Komponenten. Zwischen der Heizquelle 37 und dem Kühlaggregat 38 ist in der Fluid-Zuführleitung 36 ein Absperrventil 39 angeordnet.

Über eine in der Fig. 6 gestrichelt abschnittsweise angedeutete Steuerleitung 39a steht das Kühlaggregat 38 mit dem Fühlstandsmelder 22 in Signalverbindung. Über eine in der Fig. 6 abschnittsweise angedeutete Steuerleitung 39b steht das Kühlaggregat 38 mit einem nicht dargestellten Signalgeber für einen Betriebszustand der Zellenradschleuse 18 in Signalverbindung.

Die Wärmetauschervorrichtung 2 weist zudem einen Temperaturfühler 40 auf, der beispielsweise an einem der Wärmetauscherrohre 6 oder an einer sonstigen Stelle im Wärmeträgerfluid-Förderweg zwischen dem Zuführstutzen 8 und dem Abführstutzen 9 angeordnet ist. Der Temperaturfühler kann alternativ auch beispielsweise am Auslaufabschnitt 7 oder an der Abführleitung 12 angebracht sein und die Temperatur des aus dem Wärmetauscherabschnitt 5 auslaufenden Schüttguts messen.

Die Ausgestaltung der Wärmeträgerfluid-Zuführung nach Fig. 6 stellt sicher, dass das Schüttgut im Wärmetauscherabschnitt 5 einerseits eine vorgegebene Verweildauer im Wärmetauscherabschnitt 5 nicht überschreitet sowie andererseits eine vorgegebene Grenztemperatur nicht überschreitet. Hierzu wird über die Steuerleitungen 39a sowie 39b überwacht, ob ein

Schüttgutfluß oder ein Stillstand des Schüttguts im Wärmetauscherabschnitt 5 vorliegt. Zudem wird die Schüttguttemperatur mit dem Temperaturfühler 40 gemessen. Wird ein Überschreiten der Verweildauer oder der Grenztemperatur vom Temperaturfühler 40 festgestellt, wird das Kühlaggregat 38 aktiviert, so dass das in den Zuführstutzen 8 einlaufende Wärmeträgerfluid schnell heruntergekühlt wird. Dies erfolgt solange, bis der Temperaturfühler 40 ein Absinken der Schüttguttemperatur unter eine Schwellentemperatur misst, die unterhalb der Grenztemperatur liegt. Mit dem Dosierventil 39 kann der Fluss des Wärmeträgerfluids kontrolliert und bei Bedarf sogar ganz gestoppt werden. Soweit über den Füllstandsmelder 22 oder den Signalgeber für den Betriebszustand der Zellenradschleuse 18 ein Ende des Schüttgut-Stillstandes im Wärmetauscherabschnitt 5 erfasst wird, kann, gegebenenfalls abhängig von der vom Temperaturfühler 40 gemessenen Temperatur, die Kühlung des Wärmeträgerfluids eingestellt werden.

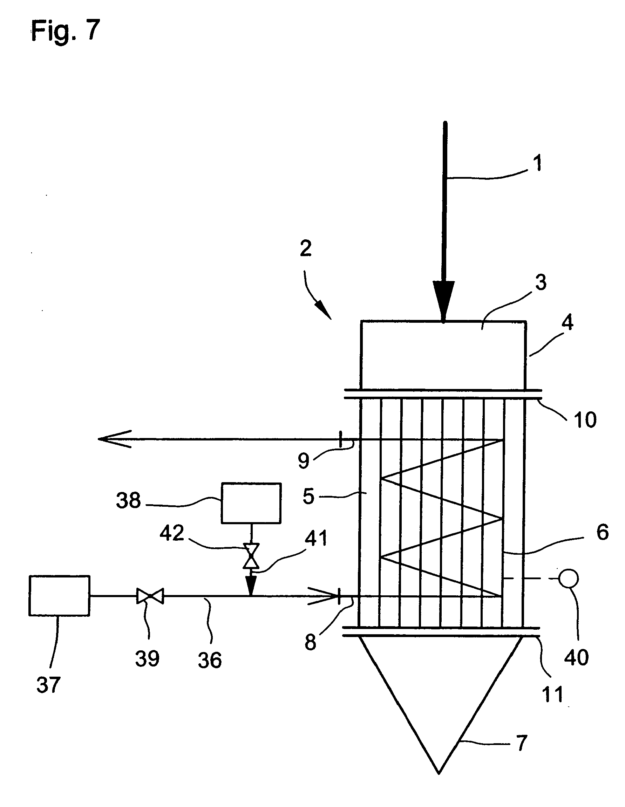

Fig. 7 zeigt eine weitere Variante einer wahlweise heiz- oder kühlbaren Wärmeträgerfluid-Zuführung. Komponenten, die denjenigen entsprechen, die vorstehend schon unter Bezugnahme auf die Fig. 1 bis 6 schon erläutert wurden, tragen die gleichen Bezugsziffern und werden nicht nochmals im Einzelnen diskutiert.

Bei der Ausführung nach Fig. 7 ist das Kühlaggregat 38 nicht in der Fluid-Zuführleitung 36 zwischen der Heizquelle 37 und dem Zuführstutzen 8 angeordnet. In die Fluid-Zuführleitung 36 mündet bei der Ausführung nach Fig. 7 vielmehr eine Kühlfluid-Zuführleitung 41 zwischen dem Dosierventil 39 und dem Zuführstutzen 8 ein. Zuführseitig ist in der Kühlfluid-Zuführleitung 41 das Kühlaggregat 38 angeordnet. Zwischen dem Kühlaggregat 38 und der Einmündung der Kühlfluid-Zuführleitung 41 in die Fluid-Zuführleitung 36 ist ein weiteres Dosierventil 42 angeordnet.

Falls bei der Ausführung nach Fig. 7 ein Überschreiten der Verweildauer des Schüttguts oder der Grenztemperatur vom Temperaturfühler 40 gemessen wird, wird das Dosierventil 42 geöffnet und Kühlfluid strömt über die Fluid-Zuführleitung 36 in den Wärmetauscherabschnitt 5 zur Kühlung des Schüttguts ein, bis die Schwellentemperatur, erfasst vom Temperaturfühler 40, unterschritten ist.

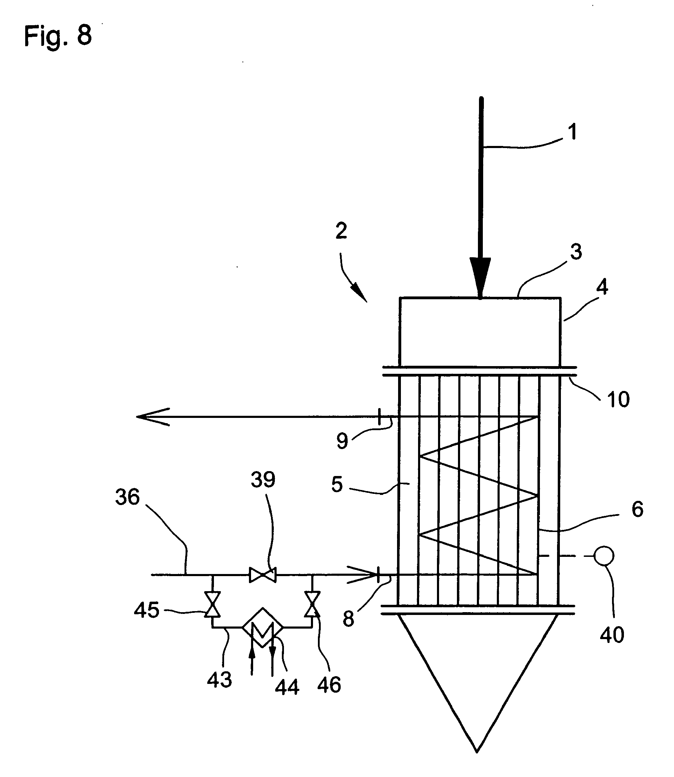

Fig. 8 zeigt eine weitere Variante einer Wärmeträgerfluid-Zuführung in den Wärmetauscherabschnitt der Wärmetauschervorrichtung. Komponenten, die denjenigen entsprechen, die vorstehend unter Bezugnahme auf die Fig. 1 bis 7 erläutert wurden, tragen die gleichen Bezugsziffern und werden nicht nochmals im Einzelnen diskutiert.

Bei der Ausführung nach Fig. 8 ist neben der Fluid-Zuführleitung 36, die das Wärmeträgerfluid vom nicht dargestellten Druckgaserzeuger dem Zuführstützen 8 zuführt, noch eine Bypass-Zuführleitung 43 angeordnet. In letzterer ist ein Wärmetauscher 44 angeordnet. Zwischen einer druckgaserzeugerseitigen Einmündung der Bypass-Zuführleitung 43 in die Fluid-Zuführleitung 36 und zwischen einer zuführstutzenseitigen Einmündung der Bypass-Zuführleitung 43 in die Fluid-Zuführleitung 36 sind zwei weitere Dosierventile 45, 46 angeordnet.

Im Normalbetrieb wird dem Wärmetauscherabschnitt 5 der Wärmetauschervorrichtung 2 das Wärmeträgerfluid über die Zuführleitung 36 und das zumindest teilweise geöffnete Dosierventil 39 zugeführt. Das Wärmeträgerfluid wird dabei über einen nicht dargestellten Wärmetauscher geheizt. Im Normalbetrieb sind die Dosierventile 45, 46 geschlossen. Wenn der Temperaturfühler 40 ein Überschreiten der Verweildauer des Schüttguts oder der Grenztemperatur des Schüttguts misst, wird das Dosierventil 39 geschlossen und die Dosierventile 45 und 46 werden geöffnet. Das Wärmeträgerfluid 36 durchläuft dann den zusätzlichen Wärmetauscher 44, in dem das Wärmeträgerfluid dann beispielsweise abgekühlt wird, bis der Temperaturfühler 40 ein Unterschreiten der Schwellentemperatur misst. Anschließend werden die Dosierventile 45, 46 wieder geschlossen und das Dosierventil 39 wird zur Herstellung des Normalbetriebs wieder geöffnet.

Das Schüttgut kann der Wärmetauschervorrichtung 2 über die Zuführleitung 1 kontinuierlich oder diskontinuierlich zugeführt werden.

## Patentansprüche

1. Vorrichtung (2) zum Kühlen und/oder Heizen von Schüttgut,
- mit einem ein Gehäuse (4) aufweisenden Wärmetauscherabschnitt (5),
- mit im Gehäuse (4) angeordneten Wärmetauscherelementen (6),
- mit mindestens einer in das Gehäuse (4) einmündenden Zuführung (8) für ein Wärmeträgerfluid,
- mit mindestens einer aus dem Gehäuse (4) ausmündenden Abführung (9) für das Wärmeträgerfluid,
- mit einem oberhalb des Wärmetauscherabschnitts (5) angeordneten Schüttgut-Einlaufabschnitt (3) zur Zuführung des Schüttguts in die Wärmetauscherelemente (6),
- mit einem unterhalb des Wärmetauscherabschnitts (5) angeordneten Schüttgut-Auslaufabschnitt (7) zur Abführung des Schüttguts aus den Wärmetauscherelementen (6),
**dadurch gekennzeichnet, dass**
- dem Schüttgut-Auslaufabschnitt (7) im Förderweg für das Schüttgut nachgeordnet sind:
- - ein Normal-Förderweg (14; 33) mit einer Dosiereinrichtung (18; 29) für das Schüttgut, die über einen Antrieb (21; 31) zwischen mindestens zwei Dosierstellungen verlagerbar angetrieben ist,
- - ein Bypass-Förderweg (15; 32; 34; 35) mit einem die Dosiereinrichtung (18; 29) unabhängig von der Dosierstellung der Dosiereinrichtung (18; 29) überbrückenden Förderdurchgang,
- wobei der Bypass-Förderweg (15; 32; 34; 35) so ausgeführt ist, dass das Schüttgut im Bypass-Förderweg (15; 32; 34; 35) ausschließlich unter Schwerkrafteinfluss förderbar ist.

2. Vorrichtung nach Anspruch 1, **dadurch gekennzeichnet, dass** die Dosiereinrichtung als Zellenradschleuse (18) ausgeführt ist.

3. Vorrichtung nach Anspruch 1 oder 2, **gekennzeichnet durch** eine Förderweiche (13), die zwischen dem Schüttgut-Auslaufabschnitt (7) und der Dosiereinrichtung (18; 29) angeordnet ist, wobei
- in einer ersten Förderweichenstellung der Normal-Förderweg (14) und
- in einer zweiten Förderweichenstellung der Bypass-Förderweg (15) freigegeben ist.

4. Vorrichtung nach Anspruch 1 oder 2, **gekennzeichnet durch** ein Bypass-Ventil (28), das im Bypass-Förderweg (15) angeordnet ist, wobei
- in einer Schließstellung des Bypass-Ventils (28) der Normal-Förderweg (14) und
- in einer Freigabestellung des Bypass-Ventils (28) der Bypass-Förderweg (15)
freigegeben ist.

5. Vorrichtung nach Anspruch 4, **dadurch gekennzeichnet, dass** das Bypass-Ventil als Schieber (28) ausgeführt ist.

6. Vorrichtung nach einem der Ansprüche 2 bis 5, **dadurch gekennzeichnet, dass** der Bypass-Förderweg (35) im Zwischenraum zwischen einem Zellenrad (20) und einem Zellenradgehäuse (19) der Zellenradschleuse (18) vorhanden ist.

7. Vorrichtung nach einem der Ansprüche 2 bis 6, **dadurch gekennzeichnet, dass** die Zellenradschleuse (18) mit einem schnell zugänglichen oder wechselbaren Zellenrad ausgeführt ist.

8. Vorrichtung nach Anspruch 1, **dadurch gekennzeichnet, dass** die Dosiereinrichtung als Schieberventil (29) ausgeführt ist, welches eine Bypass-Öffnung (32; 34) aufweist, die unabhängig von einer Dosierstellung des Schieberventils (29) den Bypass-Förderweg freigibt.

9. Vorrichtung nach Anspruch 8, **dadurch gekennzeichnet, dass** die Bypass-Öffnung (32) neben dem Schieber (30) vorhanden ist.

10. Vorrichtung nach Anspruch 8, **dadurch gekennzeichnet, dass** die Bypass-Öffnung (34) im Schieber (30) vorhanden ist.

11. Vorrichtung nach einem der Ansprüche 1 bis 10, **dadurch gekennzeichnet, dass** die Zuführung für das Wärmeträgerfluid neben einer Heizquelle (37) zur Erwärmung des Wärmeträgerfluids auch ein Kühlaggregat (38) zur Abkühlung des Wärmeträgerfluids aufweist.

12. Vorrichtung nach Anspruch 11, **dadurch gekennzeichnet, dass** das Kühlaggregat (38) in einem über mindestens ein Ventil (45, 46) zuschaltbaren Bypass (43) der Zuführung angeordnet ist.

13. Vorrichtung nach Anspruch 11, **gekennzeichnet durch** eine zusätzliche, zuschaltbare Quelle (38, 41, 42) für Wärmeträgerfluid mit gegenüber dem in der Zuführung zugeführten Wärmeträgerfluid niedrigerer Temperatur.

14. Vorrichtung nach einem der Ansprüche 1 bis 13, **dadurch gekennzeichnet, dass** die Wärmetauscherelemente (6) als in Schwerkraft-Richtung angeordnete Wärmetauscherrohre ausgeführt sind.

15. Vorrichtung nach einem der Ansprüche 1 bis 13, **dadurch gekennzeichnet, dass** die Wärmetauscherelemente (6) als in Schwerkraft-Richtung parallel angeordnete Wärmetauscherplatten ausgeführt sind.
